# EUROPÄISCHE PATENTSCHRIFT

(11) **EP 0 905 529 B1**
(45) Veröffentlichungstag und Bekanntmachung des Hinweises auf die Patenterteilung: **19.01.2005**
(21) Anmeldenummer: 98114950.3
(22) Anmeldetag: 07.08.1998
(51) Int. Cl.: G01V 3/10

(54) **Sondenanordnung**
Arrangement of detectors
Agencement de sondes

(30) Priorität: 29.09.1997 DE 29717370 U
(43) Veröffentlichungstag der Anmeldung: 31.03.1999
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- DE-A- 4 436 078
- DE-C- 19 610 003
- DE-U- 29 515 164
- US-A- 4 912 414
- "MULTIPLE-COIL, PULSE-INDUCTION METAL DETECTOR" NTIS TECH NOTES,US,US DEPARTMENT OF COMMERCE. SPRINGFIELD, VA, 1. März 1989 (1989-03-01), Seite 198 XP000029619 ISSN: 0889-8464

## Beschreibung

Die Erfindung betrifft eine Sondenanordnung für ein Suchgerät zur Detektion von verborgenen Objekten, mit einem Gehäuse, das zur Aufnahme mindestens einer Sendeschleife und mindestens einer Empfangsschleife ausgebildet ist, nach dem Oberbegriff des Anspruchs 1.

Aus dem deutschen Gebrauchsmuster G 295 15 164.1 ist eine Sonde für ein Metallsuchgerät mit einem ringförmigen, quadratischen Sondenkörper bekannt, der Verbindungsstege längs seiner Mittelachse und seiner Querachse aufweist, die sich im Zentrum des Sondenkörpers schneiden. In den Außenring und die Verbindungsstege sind dabei eine Empfangsschleife und eine Sendeschleife eingelegt.

Eine weitere kreisförmig ausgebildete Sonde ist aus der DE 36 19 308 C2 bekannt. In dieser kreisförmigen Sonde sind zwei sich unter einem Winkel von 90° kreuzende Verbindungsstege vorgesehen, so daß die kreisförmige Sonde in vier Viertel unterteilt wird, in die auf verschiedene Weisen Empfangs- und Sendeschleifen eingelegt werden können.

Eine weitere Sondenform ist aus der EP 0 654 685 A2 bekannt. In dieser Ausführungsform werden zwei im wesentlichen nebeneinander angeordnete ovale Sende- und Empfangsspulen verwendet, die sich teilweise überlagern. Die einzelnen Ovalformen weisen Verbindungsstege entlang ihrer Mittelachse auf.

In US-4,912,414 ist ein induktives Metallsuchgerät beschrieben, bei dem in einem gitterartig aufgebauten Detektorkopf eine Primärspule und eine Mehrzahl von Sekundärspulen untergebracht sind. Zwischen einem quadratischen Außenrahmen und einem quadratischen Innenrahmen sind dabei jeweils etwa mittig an den Seiten angeordnete Verbindungselemente vorgesehen. Der Erfindung liegt die **Aufgabe** zugrunde, eine Sondenanordnung der eingangs genannten Art zu schaffen, die besonders vielseitig einsetzbar ist.

Die Lösung dieser Aufgabe erfolgt mit den kennzeichnenden Merkmalen des Anspruchs 1. Vorteilhafte Weiterbildungen sind in den Unteransprüchen beschrieben.

Nach einem wesentlichen Gedanken der Erfindung weist das Gehäuse einen im wesentlichen rechteckigen Außenrahmen und einen Zentralbereich auf, dessen Außenseiten etwa parallel zu den benachbarten Seiten des Außenrahmens angeordnet sind. Dabei sind zwischen Eckbereichen des Außenrahmens und Eckbereichen des Zentralbereichs in etwa diagonal Verbindungsstege angeordnet, und der Außenrahmen und der Zentralbereich sind zur Aufnahme der Sendeschleife und der Empfangsschleife ausgelegt.

Das Gehäuse ist insgesamt flach und weist einen etwa quadratischen Zentralbereich mit einer Gelenkverbindung und Anschlußplatte auf. Der Außenrahmen ist ebenfalls rechtekkig, jedoch ringförmig ausgebildet und verfügt über abgerundete Eckbereiche, wobei eine diagonalartige Stegverbindung zum Zentralbereich vorhanden ist. Das Gehäuse hat daher eine rahmen- oder gitterartige Struktur.

Das Gehäuse weist dabei bevorzugt vier im wesentlichen trapezförmige Ausnehmungen zwischen dem Außenrahmen, dem Zentralbereich und den Verbindungsstegen auf. Je größer die Ausnehmungen sind, umso größer ist die damit erzielte Gewichts- und Materialersparnis. In einer bevorzugten Ausführungsform sind der Außenrahmen und der Zentralbereich jeweils quadratisch ausgebildet, so daß die Sonde insgesamt symmetrisch ist. Dies gilt sowohl bezüglich einer Mittelachse als auch bezüglich einer Querachse und bezüglich eines zentralen Punktes. Die Verbindungsstege zwischen den Eckbereichen des Außenrahmens und den Eckbereichen des Zentralbereichs haben die gleiche Länge und liegen auf den Diagonalen des Außenrahmens und gleichzeitig auf den verlängerten Diagonalen des Zentralbereichs.

Besonders vorteilhaft ist die Sondenanordnung dann, wenn die Länge einer Seite des Zentralbereichs etwa der 0,3 bis 0,7-fachen Länge einer Außenseite des Außenrahmens entspricht. Insbesondere ist ein Wert von 0,56 bevorzugt.

Ein besonderer Vorteil der erfindungsgemäßen Sondenanordnung besteht darin, daß eine Vielzahl verschiedener Schleifenkonfigurationen in das Gehäuse der Sondenanordnung eingelegt werden können.

Bevorzugterweise sind dabei nicht nur der Zentralbereich und der Außenrahmen, sondern auch die Verbindungsstege zur Aufnahme einer Empfangsschleife und einer Sendeschleife ausgelegt. Besonders günstig ist es dabei, die Sendeschleife und die Empfangsschleife in schmetterlingsförmiger Gestalt auszubilden. Man könnte hierbei auch von einer "Fliegen"-Form sprechen. Die Schleifenform läßt sich auch als Umriß einer geometrischen Figur beschreiben, die in ihrem Zentralbereich aus einem Quadrat besteht, an die an zwei gegenüberliegenden Seiten jeweils ein Trapez angesetzt ist, dessen kürzere Seite genau der Länge des Quadrats entspricht. Dabei erstreckt sich die Sendeschleife über zwei sich gegenüberliegende Seiten des Außenrahmens und ist über die Verbindungsstege und die senkrecht zu den betreffenden Seiten des Außenrahmens liegenden Seiten des Zentralbereichs verbunden. Die Empfangsschleife weist dieselbe Form wie die Sendeschleife auf und ist gegenüber der Sendeschleife um 90° gedreht. Dadurch bildet sich ein überlappender quadratischer Zentralbereich. Die Sendeschleife und die Empfangsschleife bilden gemeinsam ein inneres und ein äußeres Quadrat, bei dem das Verhältnis der Seitenlängen des inneren Quadrats zur Seitenlänge des äußeren Quadrats günstigerweise 0,3 bis 0,6 und insbesondere 0,56 beträgt.

Dies ist besonders bei humösen Böden günstig, da diese ferromagnetisch sind. Derartige bodenmagnetische Effekte beeinflussen die Genauigkeit von Suchgeräten und machen eine Entkopplung der Empfangsschleife nötig. Mit der erfindungsgemäßen Geometrie wird eine besonders gute Entkopplung des bodenmagnetischen Effekts bei dem obengenannten Verhältnis der Seitenlänge des inneren Quadrats zur Seitenlänge des äußeren Quadrats von 0,3 bis 0,6 erreicht. Eine vollständige Entkopplung der Schleifen erhält man für den Wert 0,56.

Ferner kann es nützlich sein - insbesondere für Anwendungen, bei denen es auf eine hohe Empfindlichkeit ankommt - die schmetterlingsförmige Spulenanordnung vorzugsweise elektrisch abzuschirmen. Zu diesem Zweck erhält die Empfangsspule eine elektrische Abschirmung nach dem Prinzip eines Faradayschen Käfigs.

In einer Weiterentwicklungs der Erfindung ist das Gehäuse aus mehreren Bereichen ausgebildet, deren Position relativ zueinander veränderbar ist. Dadurch kann die Lage und damit der Überlappungsbereich der schetterlingsförmigen Sendeschleife und der schmetterlingsförmigen Empfangsschleife derart verändert werden, daß sich die elektrische Kopplung zwischen den beiden Schleifen verändert. Dadurch kann die Entkopplung gezielt verändert und an die Bodenverhältnisse angepaßt werden. Die verschiedenen Gehäusebereiche können dabei gegeneinander verschiebbar oder verdrehbar gestaltet sein. Die elektrischen Leiter sind bei einer solchen Ausgestaltung günstigerweise in gedruckter Schaltungstechnik ausgeführt. Andererseits ist es auch möglich, elektrische Leiter in Teilbereiche einzulegen und mit Kunststoffmasse zu vergießen. Eine Multilayer-Technik wird bevorzugt für ein statisches, also unveränderbares Schleifensystem verwendet.

In einer zweiten Wicklungsvariante, die ebenfalls sowohl den Außenrahmen, als auch den Zentralbereich und die Verbindungsstege nutzt, ist die Sendeschleife im Außenrahmen angeordnet und weiterhin sind vier im wesentlichen trapezförmige Empfangsschleifen vorgesehen, die sich jeweils von einer Seite des Außenrahmens über zwei angrenzende Verbindungsstege und die zur jeweiligen Außenseite parallelen Seiten des Zentralbereichs erstrecken. Bei einer dritten Wicklungsvariante werden nur der Außenrahmen und der Zentralbereich genutzt, wobei die Sendeschleife im AuBenrahmen und die Emfangsschleife im Zentralbereich angeordnet ist.

Ein weiterer besonders hervorzuhebender Aspekt der Erfindung besteht darin, daß der Außenrahmen und die Verbindungsstege bevorzugt eine Breite von mindestens 5 % der Größe der gesamten Sondenanordnung aufweisen. Die Sendeschleife und die Empfangsschleife weisen eine Vielzahl von Wicklungen auf. Diese sind flächig in dem breit ausgestalteten Außenrahmen und den breit ausgestalteten Verbindungsstegen angeordnet, da dadurch die Induktivität unter den einzelnen Leitern gering gehalten werden kann, so daß das Rauschen deutlich abgesenkt wird und ein besonders guter Signalempfang möglich ist.

In einer günstigen Weiterbildung der Erfindung weist der Zentralbereich eine Befestigungseinrichtung zur Aufnahme einer Halte- und Führeinrichtung auf. Weiterhin ist im Zentralbereich auf der oberen Seite ein elektrischer Anschluß zur elektrischen Kontaktierung der Sendeschleife und der

Empfangsschleife vorgesehen. Dieser elektrische Anschluß ist benachbart zu der Befestigungseinrichtung angeordnet, so daß der elektrische Anschluß problemlos über die Halteund Führeinrichtung geführt und direkt daneben an dem Zentralbereich angeschlossen wird. Der Zentralbereich weist auf der unteren Seite günstigerweise eine Ausnehmung auf, da so eine weitere Gewichtsersparnis möglich ist und diese Ausnehmung gegebenenfalls zur Aufnahme einer zusätzlichen Elektronik zur Verfügung steht. Hierfür können bereits vorgefertigte Nuten oder Vorsprünge mit Rastelementen zur Aufnahme eines austauschbaren Elektronikblocks vorgesehen sein.

Nachfolgend wird die Erfindung anhand eines in der Zeichnung dargestellten Ausführungsbeispiels näher erläutert. Im einzelnen zeigen die schematischen Darstellungen in:
- Fig. 1: eine Draufsicht auf das geschlossene Gehäuse der Sondenanordnung;
- Fig. 2: eine Ansicht des offenen Gehäuses der Sondenanordnung von unten;
- Fig. 3, 4 und 5: eine erste Wicklungsvariante, die in das Gehäuse einsetzbar ist;
- Fig. 6: eine zweite Wicklungsvariante, die in das Gehäuse einsetzbar ist; und
- Fig. 7: eine dritte Wicklungsvariante, die in das Gehäuse einsetzbar ist.

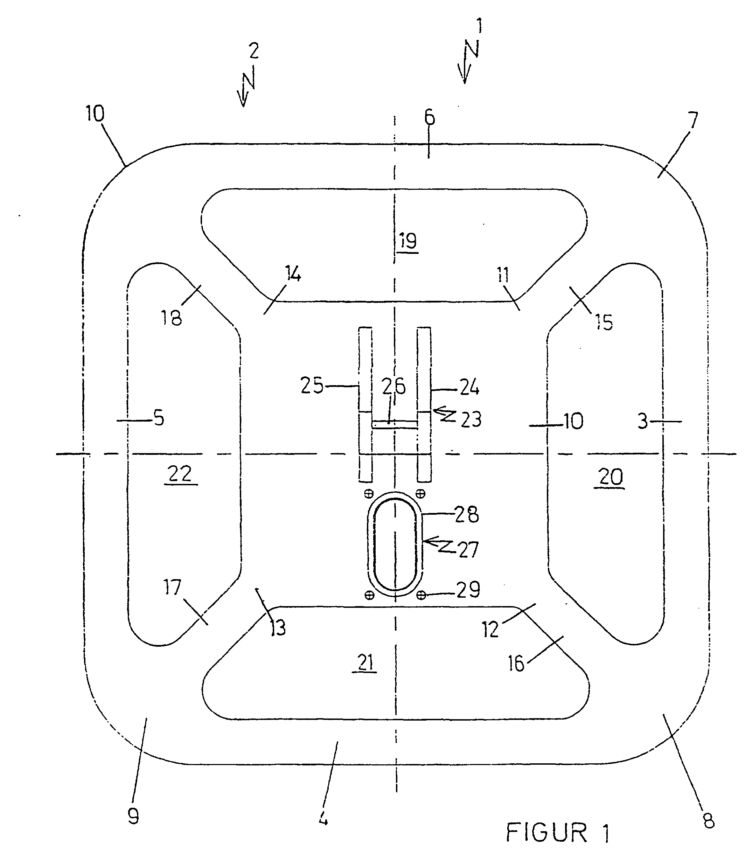

In Figur 1 ist eine Draufsicht auf das Gehäuse dargestellt, das insgesamt mit 1 bezeichnet ist. Der Außenrahmen 2 besteht aus den Seiten 3, 4, 5 und 6 und den Eckbereichen 7, 8, 9 und 10. Die Seiten 3 und 5 einerseits und die Seiten 4 und 6 andererseits sind jeweils parallel zueinander ausgerichtet. Die Eckbereiche 7, 8, 9 und 10 sind jeweils abgerundet ausgebildet, so daß trotz der an sich senkrecht aufeinanderstehenden Seiten des Außenrahmens 2 keine spitzen Ecken vorhanden sind, die zu einem Verkanten des Gehäuses im Suchbetrieb oder zu Verletzungen führen könnten. Das Gehäuse 1 ist insgesamt flach ausgebildet und kann als tellerförmig bezeichnet werden. Der quadratische Zentralbereich 10 ist in seinen Eckbereichen 11, 12, 13 und 14 durch Verbindungsstege 15, 16, 17 und 18 mit den Eckbereichen 7, 8, 9 und 10 des Außenrahmens 2 verbunden. Zwischen dem Aussenrahmen 2 und dem Zentralbereich 10 und den Verbindungsstegen 15, 16, 17 und 18 ergeben sich trapezförmige Ausnehmungen 19, 20, 21 und 22. Die Breite einer Seite des Außenrahmens, beispielsweise die Breite der Seite 5, beträgt in etwa 7,5 % der Längenausdehnung des Gesamtgehäuses 1. Die Breite der trapezförmigen Ausnehmung 20 beträgt in etwa 20 % der Gesamtausdehnung des Gehäuses 1. Die Breite des Zentralbereichs 10 entspricht in etwa der halben Ausdehnung des gesamten Gehäuses 1. Die Breite der Verbindungsstege 15, 16, 17 und 18 beträgt ebenfalls ungefähr 7,5 % der Breite der Gesamtausdehnung des Gehäuses 1. Der Zentralbereich 10 ist durch die gleich langen und symmetrisch zueinander ausgerichteten Verbindungsstege 15, 16, 17, und 18 zentriert innerhalb des Außenrahmens 2 angeordnet. Das Gehäuse 1 mit dem Außenrahmen 2, dem Zentralbereich 10 und den Verbindungsstegen 15, 16, 17 und 18 ist symmetrisch bezüglich der Seitenhalbierenden des Außenrahmens 2 und bezüglich der Diagonalen des Außenrahmens 2. Weiterhin besteht im wesentlichen Punktsymmetrie zum zentralen Mittelpunkt des Gehäuses 1. Auf dem Zentralbereich 10 ist eine Befestigungseinrichtung 23 angeordnet, die im wesentlichen aus zwei parallel zueinander angeordneten Befestigungselementen 24 und 25 besteht, die durch einen Steg 26 verbunden sind, an dem eine Halte- und Führeinrichtung schwenkbar befestigt werden kann. Weiterhin ist direkt benachbart zu der Befestigungseinrichtung 23 ein elektrischer Anschluß 27 auf dem Zentralbereich 10 vorgesehen. Der elektrische Anschluß 27 ist umgeben von einer Nut 28, in die ein O-Ring eingelegt wird. Darauf kann eine Platte mit einer Dichtkabelverschraubung aufgesetzt werden, die mit den umliegenden Schrauben 29 auf dem Zentralbereich fixiert wird. Die elektrischen Zuleitungen sind daher im elektrischen Anschluß 27 wasserdicht auf dem Zentralbereich befestigbar.

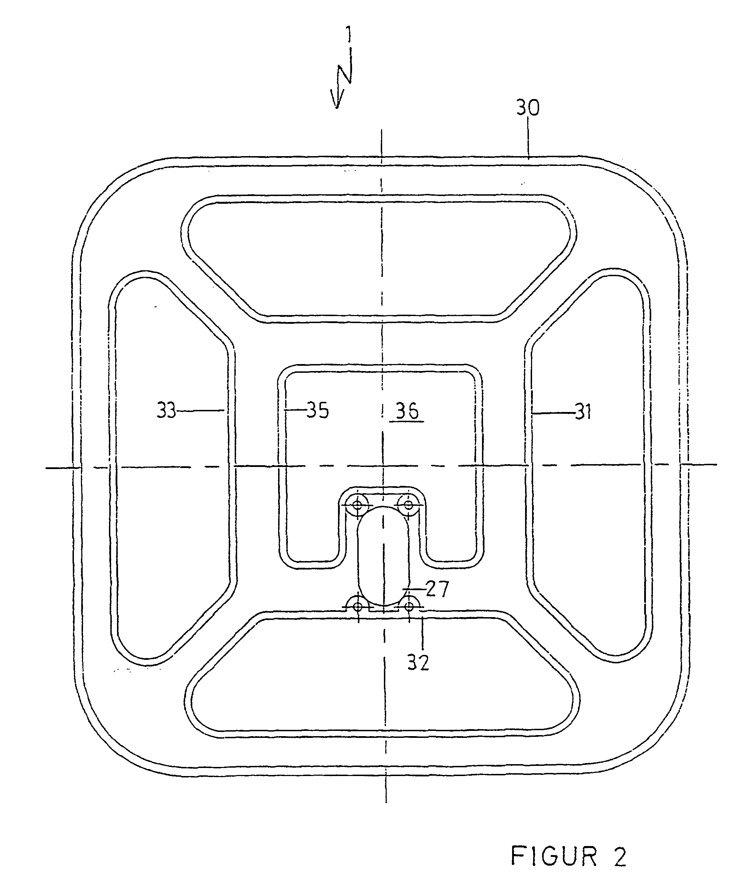

In Figur 2 ist eine untere Ansicht des Gehäuses 1 dargestellt. Die dort sichtbaren Elemente entsprechen im wesentlichen den in Figur 1 beschriebenen. Hervorzuheben sind die umlaufenden Vorsprünge 30 entlang des Außenrahmens 2 und die Vorsprünge 31, 32, 33 und 34 entlang der trapezförmigen Ausnehmungen 19, 20, 21 und 22. Weiterhin ist ein Vorsprung 35 im Inneren des Zentralbereichs 10 vorgesehen. Zwischen diesen Vorsprüngen verbleiben relativ breite Ausnehmungen, die im wesentlichen der Breite des Außenrahmens 2 und der Breite der Verbindungsstege 15, 16, 17 und 18 entsprechen und in die die Kabel der Sendeschleife und der Empfangsschleife eingelegt werden. Nach Einlegen der Schleifen werden diese innerhalb der von den Vorsprüngen 30, 31, 32, 33, 34 und 35 gebildeten Kanäle vergossen. Hervorzuheben ist noch, daß hier auf der Unterseite auch der rückwärtige Bereich des elektrischen Anschlusses 27 dargestellt ist und dieser elektrische Anschluß 27 von dem Vorsprung 35 umgeben ist, so daß ein U-förmiger Bereich verbleibt. Dieser U-förmige Bereich ist als Ausnehmung 36 ausgebildet. Dadurch wird eine weitere Gewichtsersparnis erreicht und außerdem kann dieser Bereich zur Aufnahme einer zusätzlichen Auswerte- oder Schaltelektronik verwendet werden. Dazu sind an den Rändern Klip- und Halteelemente vorgesehen, so daß eine zusätzliche Elektronikschaltung leicht eingesetzt und ausgetauscht werden kann. Die Kanäle, in die die Leiter eingelegt werden, sollten eine Breite von ca. 3 cm aufweisen, so daß die Leiter darin bandförmig mit Abstand voneinander angeordnet werden können, da so eine gegenseitige Induktion und ein dabei entstehendes Rauschen des Signals verringert werden kann.

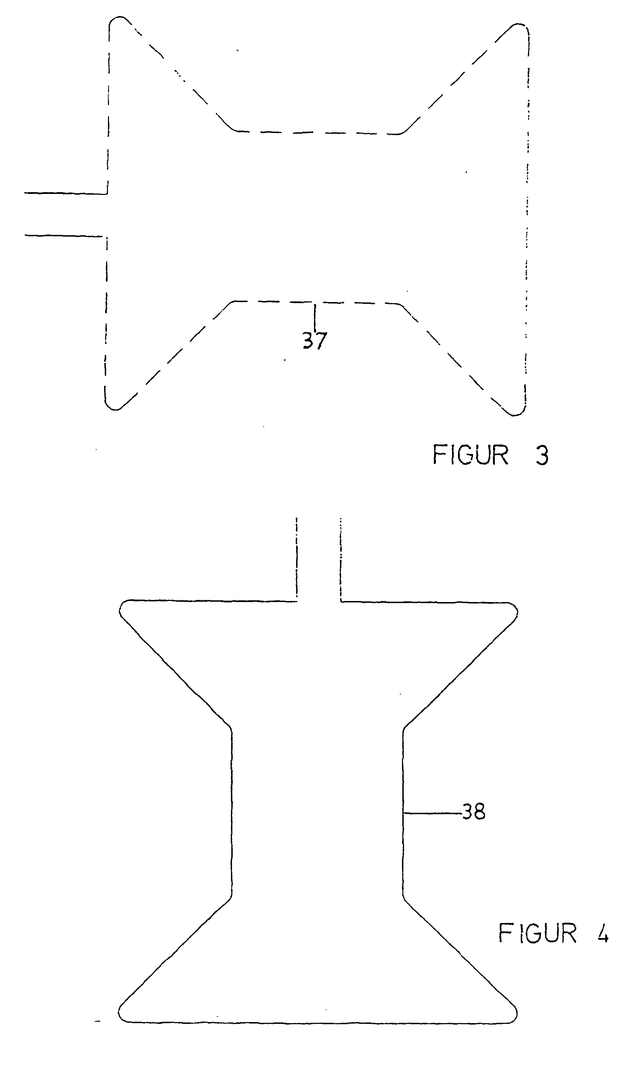

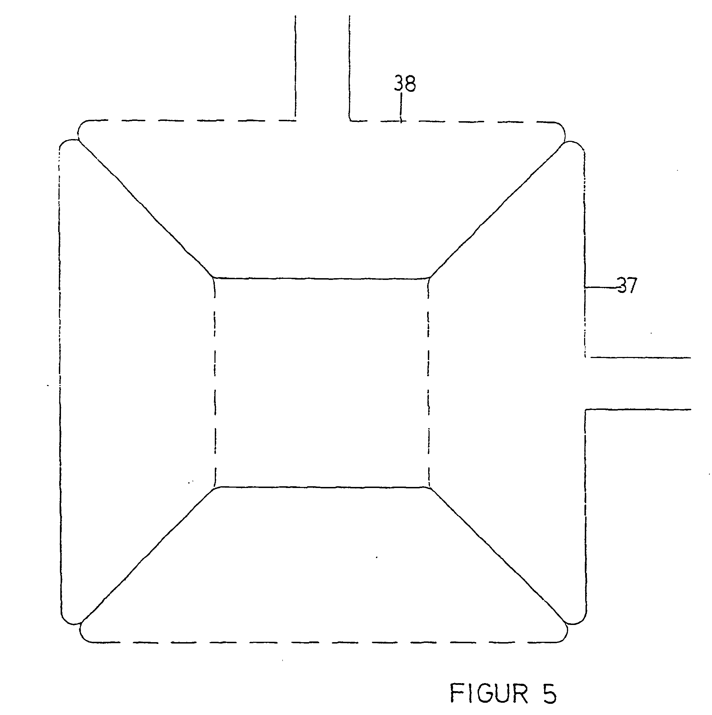

In den Figuren 3, 4 und 5 ist eine erste Wicklungsvariante dargestellt, die in das Gehäuse eingesetzt werden kann. In Fig. 3 ist eine schmetterlingsförmige Sendeschleife 37 dargestellt, die zwei zueinander parallele Außenseiten aufweist, die in die Seiten 3 und 5 des Außenrahmens 2 eingesetzt werden. Die dann jeweils schräg nach innen verlaufenden Seiten werden in die Verbindungsstege 15, 16 auf der einen Seite und 17, 18 auf der anderen Seite eingelegt. Die Verbindung dieser beiden Seiten verläuft dann in dem Zentralbereich 10 an den Außenseiten des Zentralbereichs entlang der Ausnehmungen 19 und 21. In Figur 4 ist die dazu gehörige Empfangsschleife 38 dargestellt, die gegenüber der Sendeschleife 37 um 90° gedreht ist. Die Außenseiten der Empfangsschleife 38, die ebenfalls als schmetterlingsförmig beschrieben werden können, werden in die Seiten 6 und 4 des Außenrahmens 2 eingelegt. Die Empfangsschleife 38 erstreckt sich ausgehend von der Seite 6 des Außenrahmens 2 über den Verbindungssteg 14 auf den Zentralbereich 10 entlang der Ausnehmung 22 und über den Verbindungssteg 13 zu der Seite 4 des Außenrahmens 2 und zurück über den Verbindungssteg 16 auf den Zentralbereich 10 entlang der Ausnehmung 20 und über den Verbindungssteg 15 zurück zur Seite 6 des Außenrahmens 2. Diese Spulenform kann auch durch zwei sich mit den kurzen Seiten gegenüberstehende Trapeze beschrieben werden, die durch ein zwischen diesen Trapezen liegendes Quadrat verbunden sind. Die Anschlüsse der schmetterlingsförmigen Spulen 37 und 38 werden über den elektrischen Anschluß 27 nach außen geführt. In Figur 5 sind die Schleifen 37 und 38 zusammen dargestellt, so daß sich deutlich ergibt, wie diese beiden schmetterlingsförmigen Schleifen gemeinsam ein inneres Quadrat und ein äußeres Quadrat ergeben. Die Sendeschleife 37 ist in Figur 3 mit einer unterbrochenen und in Figur 5 mit einer durchgezogenen Linie dargestellt. Demgegenüber ist die Empfangsschleife 38 in Figur 4 mit einer durchgezogenen und in Figur 5 mit einer unterbrochenen Linie dargestellt.

Eine derartige Sendeschleife 37 wird bevorzugt in Pulsinduktionstechnik betrieben. Durch die geometrische Entkopplung der Empfangsschleife 38 und der Sendeschleife 37 werden einerseits bodenmagnetische Effekte und andererseits auch die Stoßspannung auf der Empfängerseite reduziert. Besonders bevorzugt werden zur Erregung der Sendespule 37 kurze, bipolare Impulse verwendet. Eine andere besonders günstige Möglichkeit hinsichtlich der Sendeschleife 37 und der Empfangsschleife 38 besteht darin, diese in einem verschiebbaren oder drehbaren Gehäuse anzuordnen, so daß die geometrische Position der Sendeschleife 37 gegenüber der Empfangsschleife 38 geändert werden kann und auf diese Weise die geometrische Kopplung zwischen den Schleifen variabel und einstellbar ist. Will man die Spulenanordnung für Anwendungen nutzen, bei denen es auf extrem hohe Empfindlichkeit ankommt, so ist es nützlich, vorzugsweise die Empfangsschleife 38, gegebenenfalls aber die Sendeschleife mit einer elektrischen Abschirmung nach dem Prinzip eines Faradayschen Käfigs auszustatten.

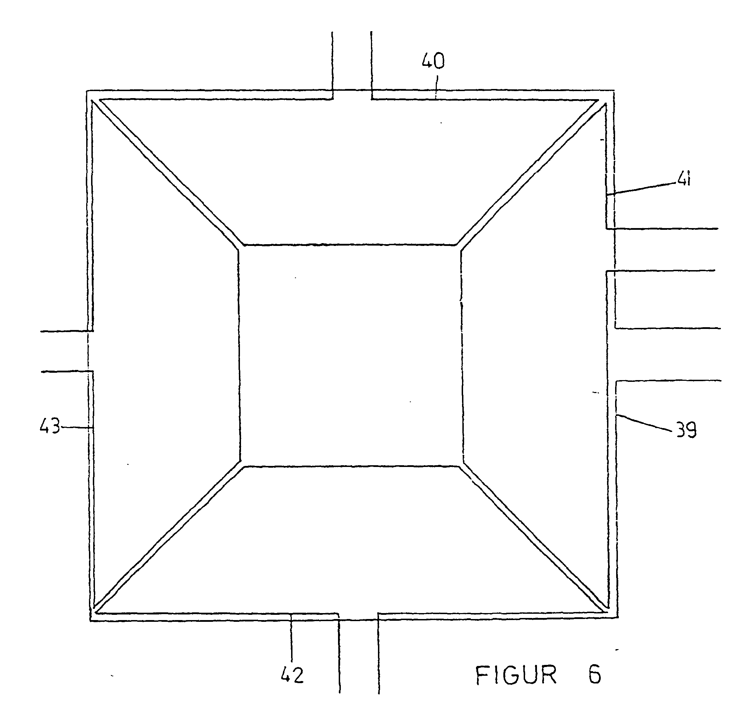

In Figur 6 ist eine zweite Variante dargestellt, in der die Schleifen in das Gehäuse eingelegt sein können. Dabei ist eine große umlaufende Sendeschleife 39 vorgesehen, die in den Außenrahmen 2 des Gehäuses 1 eingelegt wird. Weiterhin sind vier trapezförmige Empfangsschleifen 40, 41, 42, und 43 vorgesehen, die jeweils ein Trapez auf einer Seite des Außenrahmens 2, den daran angrenzenden Verbindungsstegen und dem Zentralbereich bilden und um eine der trapezförmigen Ausnehmungen 19, 20, 21 und 22 verlaufen. Die trapezförmige Empfangsschleife 40 verläuft beispielsweise über die Seite 6 des Außenrahmens 2, die Verbindungsstege 11 und 14 und den Zentralbereich 10.

In einer anderen Alternative gemäß Fig. 6 können die trapezförmigen Einzelschleifen 40, 41, 42, 43 in typischer Kompensationsart so geschaltet sein, daß z. B. zwei Sendespulen 41, 43 gegenphasig zu zwei Empfangsspulen 40, 42 geschaltet sind. Die Schleife 39 würde in diesem Fall üblicherweise entfallen, könnte jedoch auch als umlaufende Schleife beibehalten werden.

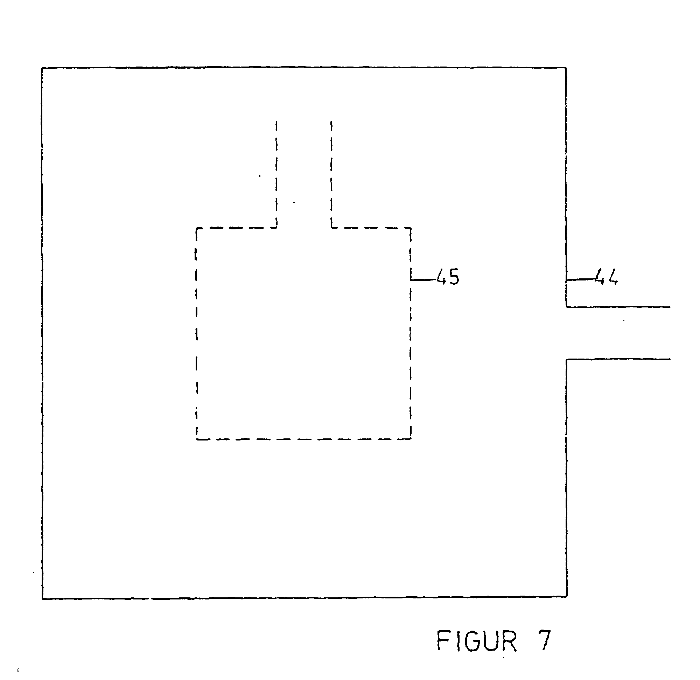

In der dritten, in Figur 7 dargestellten Wicklungsvariante, ist eine außen umlaufende Sendeschleife 44, die in den Außenrahmen 2 des Gehäuses 1 eingelegt wird, und eine innenliegende Empfangsschleife 45 vorgesehen, die auf dem Zentralbereich 10 angeordnet ist. Diese Variante stellt eine besonders einfache Form der elektrischen Kopplung zwischen Sendeschleife 44 und Empfangsschleife 45 dar.

Weiterhin sind auch Kombinationen und Abwandlungen der oben beschriebenen Wicklungsvarianten möglich. So kann zusätzlich zu der in Figur 6 dargestellten Variante eine weitere Empfangsschleife 44, entsprechend der in Figur 7 dargestellten, verwendet werden. Ebenso ist eine Kombination der Schmetterlingsschleife 37 mit den trapezförmigen Empfangsschleifen 40, 41, 42, 43, insbesondere den Empfangsschleifen 40 und 42 möglich.

## Patentansprüche

1. Sondenanordnung für ein Suchgerät zur Detektion von verborgenen Objekten, mit einem Gehäuse (1), das zur Aufnahme mindestens einer Sendeschleife und mindestens einer Empfangsschleife ausgebildet ist,
wobei das Gehäuse (1) einen im wesentlichen rechteckigen Außenrahmen (2) aufweist,
wobei das Gehäuse (1) einen Zentralbereich (10) aufweist, dessen Außenseiten parallel zu den benachbarten Seiten (3, 4, 5, 6) des Außenrahmens (2) angeordnet sind,
und wobei der Außenrahmen (2) und der Zentralbereich (10) zur Aufnahme der Sendeschleife und der Empfangsschleife(n) ausgelegt sind,
**dadurch gekennzeichnet,**
**daß** zwischen Eckbereichen (7, 8, 9, 10) des Außenrahmens (2)und Eckbereichen des Zentralbereichs (10) Verbindungsstege (15, 16, 17, 18) angeordnet sind und
**daß** die Verbindungsstege (15, 16, 17, 18) auf den Diagonalen des Außenrahmens (2) angeordnet sind.

2. Sondenanordnung nach Anspruch 1,
**dadurch gekennzeichnet,**
**daß** das Gehäuse (1) vier im wesentlichen trapezförmige Ausnehmungen (19, 20, 21, 22) zwischen dem Außenrahmen (2), dem Zentralbereich (10) und den Verbindungsstegen (15, 16, 17, 18) aufweist.

3. Sondenanordnung nach einem der Ansprüche 1 und 2, **dadurch gekennzeichnet,**
**daß** der Außenrahmen (2) quadratisch ist.

4. Sondenanordnung nach einem der vorhergehenden Ansprüche,
**dadurch gekennzeichnet,**
**daß** der Zentralbereich (10) quadratisch ist.

5. Sondenanordnung nach einem der vorhergehenden Ansprüche,
**dadurch gekennzeichnet**
**daß** die Länge einer Seite des Zentralbereichs (10) dem 0,3 bis 0,7-fachen der Länge einer Außenseite des Außenrahmens (3) entspricht.

6. Sondenanordnung nach Anspruch 5,
**dadurch gekennzeichnet**
**daß** die Länge einer Seite des Zentralbereichs dem 0,56-fachen der Länge einer Außenseite des Außenrahmens entspricht.

7. Sondenanordnung nach einem der vorhergehenden Ansprüche,
**dadurch gekennzeichnet,**
**daß** der Außenrahmen (2), der Zentralbereich (10) und die Verbindungsstege (15, 16, 17, 18) zur Aufnahme einer Empfangsschleife und einer Sendeschleife ausgelegt sind und diese darin angeordnet sind.

8. Sondenanordnung nach Anspruch 7,
**dadurch gekennzeichnet,**
**daß** die Sendeschleife (37) und die Empfangsschleife (38) jeweils eine Schleifenform aufweisen, die als Umriss einer geometrischen Figur beschreibbar ist, die in ihrem Zentralbereich aus einem Quadrat besteht, an welches an zwei gegenüberliegenden Seiten jeweils ein Trapez angesetzt ist, dessen kürzere Seite der Länge des Quadrats entspricht.

9. Sondenanordnung nach einem der Ansprüche 7 oder 8,
**dadurch gekennzeichnet,**
**daß** sich die Sendeschleife (37) über zwei sich genenüberliegende Seiten (3, 5) des Außenrahmens (2) erstreckt und über die Verbindungsstege (12, 15 und 17, 18) und die senkrecht zu den betreffenden Seiten des Außenrahmens liegenden Seiten des Zentralbereichs verbunden ist.

10. Sondenanordnung nach einem der Ansprüche 7 bis 9,
**dadurch gekennzeichnet,**
**daß** die Empfangsschleife (38) dieselbe Form wie die Sendeschleife (37) aufweist und daß die Empfangsschleife (38) gegenüber der Sendeschleife (37) um 90° gedreht ist.

11. Sondenanordnung nach einem der Ansprüche 7 bis 10,
**dadurch gekennzeichnet,**
**daß** die Sendeschleife (37) und die Empfangsschleife (38) gemeinsam ein inneres und ein äußeres Quadrat bilden, und
**daß** das Verhältnis der Seitenlänge des inneren Quadrats zur Seitenlänge des äußeren Quadrats 0,3 bis 0,6, insbesondere 0,56, beträgt.

12. Sondenanordnung nach einem der Ansprüche 7 bis 11,
**dadurch gekennzeichnet,**
**daß** die Sende- und/oder Empfangsschleife (38) zumindest teilweise elektrisch geschirmt ist.

13. Sondenanordnung nach einem der vorhergehenden Ansprüche,
**dadurch gekennzeichnet,**
**daß** das Gehäuse (1) aus verschiedenen Teilbereichen besteht, die geometrisch zueinander verschiebbar sind.

14. Sondenanordnung nach einem der vorhergehenden Ansprüche,
**dadurch gekennzeichnet,**
**daß** das Gehäuse (1) aus mehreren Teilbereichen besteht, die gegeneinander verdrehbar sind.

15. Sondenanordnung nach einem der Ansprüche 1 bis 7, **dadurch gekennzeichnet,**
**daß** eine Sendeschleife (39) im Außenrahmen (2) angeordnet ist, und
**daß** vier im wesentlichen trapezförmige Empfangsschleifen (40, 41, 42, 43) vorgesehen sind, die sich jeweils von einer Seite des Außenrahmens (2) über zwei angrenzende Verbindungsstege (15, 16, 17, 18) und die zur Außenseite parallele Seite des Zentralbereichs (10) erstrecken.

16. Sondenanordnung nach einem der Ansprüche 1 bis 6, **dadurch gekennzeichnet,**
**daß** eine Sendeschleife (44) im Außenrahmen (2) angeordnet ist, und
**daß** eine Empfangsschleife (45) im Zentralbereich (10) angeordnet ist.

17. Sondenanordnung nach einem der vorhergehenden Ansprüche,
**dadurch gekennzeichnet,**
**daß** der Außenrahmen (2) und die Verbindungsstege (15, 16, 17, 18) eine Breite von mindestens 5 % der Außenabmessung des Gehäuses (1) aufweisen.

18. Sondenanordnung nach Anspruch 17,
**dadurch gekennzeichnet,**
**daß** die Sendeschleifen (37, 39, 44) und die Empfangsschleifen (38, 40, 41, 42, 43, 45) eine Vielzahl von Wicklungen aufweisen und daß die Wicklungen flächig verteilt sind.

19. Sondenanordnung nach einem der vorhergehenden Ansprüche,
**dadurch gekennzeichnet,**
**daß** der Zentralbereich (10) eine Befestigungseinrichtung (23) zur Aufnahme einer Halte- und Führeinrichtung aufweist.

20. Sondenanordnung nach einem der vorhergehenden Ansprüche,
**dadurch gekennzeichnet,**
**daß** der Zentralbereich (10) auf der oberen Seite einen elektrischen Anschluß (27) zur elektrischen Kontaktierung der Sendeschleife und der Empfangsschleife aufweist.

21. Sondenanordnung nach einem der Ansprüche 19 oder 20,
**dadurch gekennzeichnet,**
**daß** der elektrische Anschluß (27) benachbart zu der Befestigungseinrichtung (23) angeordnet ist.

22. Sondenanordnung nach einem der vorhergehenden Ansprüche,
**dadurch gekennzeichnet,**
**daß** der Zentralbereich (10) der Sondenanordnung auf der unteren Seite eine Ausnehmung (36) aufweist.

23. Sondenanordnung nach Anspruch 2,
**dadurch gekennzeichnet,**
**daß** in den vier trapezförmigen Ausnehmungen (19, 20, 21, 22) zwei Sendespulen (41, 43) gegenphasig zu zwei Empfangsspulen (40, 42) eingebracht sind.

## Claims

1. Probe arrangement for a detector for detecting hidden objects, having a casing (1), which is constructed for receiving at least one transmitting loop and at least one receiving loop,
the casing (1) having a substantially rectangular outer frame (2),
the casing (1) having a central area (10), whose outsides are located parallel to the adjacent sides (3, 4, 5, 6) of the outer frame (2)
and the outer frame (2) and central area (10) are designed for receiving the transmitting loop and the receiving loop or loops,
**characterized in**
**that** connecting webs (15, 16, 17, 18) are positioned between corner regions (7, 8, 9, 10) of the outer frame (2) and corner regions of the central area (10)
and **that** the connecting webs (15, 16, 17, 18) are located on the diagonal of the outer frame (2).

2. Probe arrangement according to claim 1,
**characterized in**
**that** the casing (1) has four substantially trapezoidal recesses (19, 20, 21, 22) between the outer frame (2), the central area (10) and the connecting webs (15, 16, 17, 18).

3. Probe arrangement according to one of the claims 1 and 2,
**characterized in**
**that** the outer frame (2) is square.

4. Probe arrangement according to one of the preceding claims,
**characterized in**
**that** the central area (10) is square.

5. Probe arrangement according to one of the preceding claims,
**characterized in**
**that** the length of one side of the central area (10) corresponds to 0.3 to 0.7 times the length of an outside of the outer frame (3).

6. Probe arrangement according to claim 5,
**characterized in**
**that** the length of one side of the central area corresponds to 0.56 times the length of an outside of the outer frame.

7. Probe arrangement according to one of the preceding claims,
**characterized in**
**that** the outer frame (2), central area (10) and connecting webs (15, 16, 17, 18) are designed for receiving a receiving loop and a transmitting loop and said loops are located therein.

8. Probe arrangement according to claim 7,
**characterized in**
**that** the transmitting loop (37) and receiving loop (38) each have a loop shape, which can be described as an outline of a geometrical figure, which in its central area comprises a square, to which is applied on two opposing sides each a trapezium, whose shorter side corresponds to the length of the square.

9. Probe arrangement according to one of the claims 7 or 8,
**characterized in**
**that** the transmitting loop (37) extends over two opposing sides (3, 5) of the outer frame (2) and is connected via the connecting webs (12, 15 and 17, 18) and the sides of the central area perpendicular to the particular sides of the outer frame.

10. Probe arrangement according to one of the claims 7 to 9,
**characterized in**
**that** the receiving loop (38) has the same shape as the transmitting loop (37) and that the receiving loop (38) is turned by 90ø relative to the transmitting loop (37).

11. Probe arrangement according to one of the claims 7 to 10,
**characterized in**
**that** the transmitting loop (37) and receiving loop (38) jointly form an inner and an outer square and that the ratio of the side length of the inner square to the side length of the outer square is 0.3 to 0.6, particularly 0.56.

12. Probe arrangement according to one of the claims 7 to 11,
**characterized in**
**that** the transmitting and/or receiving loop (38) is at least partly electrically shielded.

13. Probe arrangement according to one of the preceding claims,
**characterized in**
**that** the casing (1) comprises different partial areas, which are geometrically displaceable with respect to one another.

14. Probe arrangement according to one of the preceding claims,
**characterized in**
**that** the casing (1) comprises several partial areas rotatable relative to one another.

15. Probe arrangement according to one of the claims 1 to 7,
**characterized in**
**that** a transmitting loop (39) is located in the outer frame (2) and that four substantially trapezoidal receiving loops (40, 41, 42, 43) are provided, which in each case extend from one side of the outer frame (2) via two adjacent connecting webs (15, 16, 17, 18) and the side of the central area (10) parallel to the outside.

16. Probe arrangement according to one of the claims 1 to 6,
**characterized in**
**that** a transmitting loop (44) is located in the outer frame (2) and that a receiving loop (45) is located in the central area (10).

17. Probe arrangement according to one of the preceding claims,
**characterized in**
**that** the outer frame (2) and connecting webs (15, 16, 17, 18) have a width of at least 5% of the outer dimension of the casing (1).

18. Probe arrangement according to claim 17,
**characterized in**
**that** the transmitting loops (37, 39, 44) and receiving loops (38, 40, 41, 42, 43, 45) have a plurality of windings and that the windings are distributed in areal manner.

19. Probe arrangement according to one of the preceding claims,
**characterized in**
**that** the central area (10) has a fastening device (23) for receiving a holding and guiding device.

20. Probe arrangement according to one of the preceding claims,
**characterized in**
**that** on the top side the central area (10) has an electrical connection (27) for electrically contacting the transmitting loop and receiving loop.

21. Probe arrangement according to one of the claims 19 or 20,
**characterized in**
**that** the electrical connection (27) is adjacent to the fastening device (23).

22. Probe arrangement according to one of the preceding claims,
**characterized in**
**that** on the bottom side the central area (10) of the probe arrangement has a recess (36).

23. Probe arrangement according to claim 2,
**characterized in**
**that** in the four trapezoidal recesses (19, 20, 21, 22) are introduced two transmitting coils (41, 43) in phase opposition to two receiving coils (40, 42).

## Revendications

1. Système de sonde pour un appareil de recherche servant à détecter des objets cachés, avec un boîtier (1) qui est conformé pour recevoir au moins une boucle émettrice et au moins une boucle réceptrice,
le boîtier (1) présentant un cadre extérieur (2) sensiblement rectangulaire,
le boîtier(1) présentant une partie centrale (10) dont les côtés extérieurs sont parallèles aux côtés voisins (3, 4, 5, 6) du cadre extérieur (2),
et le cadre extérieur (2) et la partie centrale (10) étant conçus pour recevoir la boucle émettrice et la/les boucle(s) réceptrice(s),
***caractérisé en ce qu'***entre des parties de coin (7, 8, 9, 10) du cadre extérieur (2) et des parties de coin de la partie centrale (10) sont placées des barres de liaison (15, 16, 17, 18), et
***en ce que*** les barres de liaison (15, 16, 17, 18) sont placées sur la diagonale du cadre extérieur (2).

2. Système de sonde selon la revendication 1,
***caractérisé en ce que*** le boîtier (1) présente quatre évidements sensiblement trapézoïdaux (19, 20, 21, 22) entre le cadre extérieur (2), la partie centrale (10) et les barres de liaison (15, 16, 17, 18).

3. Système de sonde selon l'une quelconque des revendications 1 et 2,
***caractérisé en ce que*** le cadre extérieur (2) est carré.

4. Système de sonde selon l'une quelconque des revendications précédentes,
***caractérisé en ce que*** la partie centrale (10) est carrée.

5. Système de sonde selon l'une quelconque des revendications précédentes,
***caractérisé en ce que*** la longueur d'un coté de la partie centrale (10) correspond à 0,3 fois à 0,7 fois la longueur d'un côté extérieur du cadre extérieur (2).

6. Système de sonde selon la revendication 5,
***caractérisé en ce que*** la longueur d'un côté de la partie centrale correspond à 0,56 fois la longueur d'un côté extérieur du cadre extérieur.

7. Système de sonde selon l'une quelconque des revendications précédentes,
***caractérisé en ce que*** le cadre extérieur (2), la partie centrale (10) et les barres de liaison (15, 16, 17, 18) sont conçus pour recevoir une boucle réceptrice et une boucle émettrice et celles-ci y sont placées.

8. Système de sonde selon la revendication 7,
***caractérisé en ce que*** la boucle émettrice (37) et la boucle réceptrice (38) présentent chacune une forme en boucle qui peut être décrite par le contour d'une figure géométrique qui se compose d'un carré dans sa partie centrale, carré sur lequel un trapèze est rapporté respectivement sur deux côtés opposés, trapèze dont le petit côté correspond à la longueur du carré.

9. Système de sonde selon l'une quelconque des revendications 7 ou 8,
***caractérisé en ce que*** la boucle émettrice (37) s'étend sur deux côtés mutuellement opposés (3, 5) du cadre extérieur (2) et est reliée par les barres de liaison (12, 15 et 17, 18) et des côtés de la partie centrale perpendiculaires aux côtés concernés du cadre extérieur.

10. Système de sonde selon l'une quelconque des revendications 7 à 9,
***caractérisé en ce que*** la boucle réceptrice (38) présente la même forme que la boucle émettrice (37) et
***en ce que*** la boucle réceptrice (38) est tournée de 90° par rapport à la boucle émettrice (37).

11. Système de sonde selon l'une quelconque des revendications 7 à 10,
***caractérisé en ce que*** la boucle émettrice (37) et la boucle réceptrice (38) forment en commun un carré intérieur et un carré extérieur, et
***en ce que*** le rapport entre la longueur du côté du carré intérieur et la longueur du côté du carré extérieur est égal à 0,3 à 0,6, en particulier 0,56.

12. Système de sonde selon l'une quelconque des revendications 7 à 11,
***caractérisé en ce que*** la boucle émettrice et/ou réceptrice (38) est au moins partiellement blindée électriquement.

13. Système de sonde selon l'une quelconque des revendications précédentes,
***caractérisé en ce que*** le boîtier (1) est composé de plusieurs parties qui sont mobiles géométriquement les unes par rapport aux autres.

14. Système de sonde selon l'une quelconque des revendications précédentes,
***caractérisé en ce que*** le boîtier (1) est composé de plusieurs parties qui sont rotatives les unes par rapport aux autres.

15. Système de sonde selon l'une quelconque des revendications 1 à 7,
***caractérisé en ce qu'***une boucle émettrice (39) est placée dans le cadre extérieur (2), et
***en ce que*** quatre boucles réceptrices (40, 41, 42, 43) sensiblement trapézoïdales sont prévues, qui s'étendent chacune depuis un côté du cadre extérieur (2) par deux barres de liaison voisines (15, 16, 17, 18) et du côté de la partie centrale (10) parallèle au côté extérieur.

16. Système de sonde selon l'une quelconque des revendications 1 à 6,
***caractérisé en ce qu'*** une boucle émettrice (44) est placée sur le cadre extérieur (2) et
***en ce qu'***une boucle réceptrice (45) est placée dans la partie centrale (10).

17. Système de sonde selon l'une quelconque des revendications précédentes,
***caractérisé en ce que*** le cadre extérieur (2) et les barres de liaison (15, 16, 17, 18) présentent une largeur d'au moins 5 % de la dimension extérieure du boîtier (1).

18. Système de sonde selon la revendication 17,
***caractérisé en ce que*** les boucles émettrices (37, 39, 44) et les boucles réceptrices (38, 40, 41, 42, 43, 45) présentent une pluralité d'enroulements et
***en ce que*** les enroulements sont répartis à plat.

19. Système de sonde selon l'une quelconque des revendications précédentes,
***caractérisé en ce que*** la partie centrale (10) présente un dispositif de fixation (23) pour recevoir un dispositif de maintien et de guidage.

20. Système de sonde selon l'une quelconque des revendications précédentes,
***caractérisé en ce que*** la partie centrale (10) présente sur sa face supérieure un branchement électrique (27) pour la mise en contact électrique de la boucle émettrice et de la boucle réceptrice.

21. Système de sonde selon l'une quelconque des revendications 19 ou 20,
***caractérisé en ce que*** le branchement électrique (27) est placé au voisinage du dispositif de fixation (23).

22. Système de sonde selon l'une quelconque des revendications précédentes,
***caractérisé en ce que*** la partie centrale (10) du système de sonde présente un évidement (36) sur le côté inférieur.

23. Système de sonde selon la revendication 2,
***caractérisé en ce que*** deux bobines émettrices (41, 43) en opposition de phase de deux bobines réceptrices (40, 42) sont placées dans les quatre évidements trapézoïdaux (19, 20, 21, 22).
